# EUROPEAN PATENT APPLICATION

(11) **EP 4 067 128 A1**
(43) Date of publication of application: **05.10.2022**
(21) Application number: 21166478.4
(22) Date of filing: 31.03.2021
(51) Int. Cl.: B60H 1/00, F04D 29/42, F04D 1/00

(54) **A BLOWER UNIT**

(71) Applicant: Valeo Klimasysteme GmbH, 96476 Bad Rodach (DE)
(72) Inventor: MUHR, Sebastian, Bad Rodach (DE); GESELL, Bodo, Bad Rodach (DE); GAERTNER, Stefan, Bad Rodach (DE)
(74) Representative: Valeo Systèmes Thermiques

(57) **Abstract**

A blower unit 1 for an air-conditioning device intended to be fitted to a motor vehicle, comprising an intake duct 10, a double suction type centrifugal fan 20 comprising a first suction side 21 and a second suction side 22, a motor 30 configured to motorize the fan 20, and a scroll case 40, wherein the scroll case 40 is adapted to split the air intake 10 duct into at least a first air channel 11 and a second air channel 12, the first air channel 11 being adapted to feed the air into the first suction side 21, and the second air channel 12 being adapted to feed air into the second suction side 21.

## Description

### FIELD OF THE INVENTION

The present disclosure relates to a heating ventilation and air conditioning system, particularly, the present disclosure relates to a noise damping system for a heating ventilation and air conditioning system for a vehicle.

### BACKGROUND OF THE INVENTION

A Heating Ventilation and Air Conditioning (HVAC) system hereinafter referred to as "system" for a vehicle regulates temperature and flow of air delivered to an inside of a vehicle cabin through a plurality of vents. Along with other elements, the "system" includes a main housing that in turn includes a blower housing and a diffuser section. The main housing also receives an evaporator, a heater and flow guide means such as rotary flaps and baffles for guiding fluid flow through at least one of the heater and evaporator and eventually directing the fluid processed by at least one of the evaporator and the heater to vents for delivering different combinations of fluid flow temperatures inside the vehicle cabin. The "system" may further include a suction side air filter disposed at inlet to the blower housing and a pressure side air filter disposed at outlet to the blower housing and upstream of the evaporator. The blower housing receives a blower or a fan and configures an annular air guiding channel between the fan and the blower housing. The diffuser section connects the blower housing to either one of the evaporator and the pressure side filter disposed upstream of the evaporator. The fan disposed in the blower housing generates pressure difference across the evaporator and also the heater for facilitating the flow of fluid there through.

The conventional "system", particularly, the fan or the blower of the "system" generates noise, particularly, at high cooling performance. The noise is transferred to the main housing and from the main housing to the vehicle cabin. Further, there is amplification of acoustic energy of the noise as it is transferred via blower air duct and main housing into the vehicle cabin. As a result, the noise generated by the fan or the blower and reaching the vehicle cabin becomes noticeable and causes disturbance and inconvenience to the passengers inside the vehicle cabin. The noise reaching the vehicle cabin is in the frequency range between 100 Hz and 10 kHz and is particularly more disturbing in instances such as when vehicle stops for short durations at traffic lights with engine off condition, especially in electrical driven vehicles. Few noise damping systems are known, for example, the German Patent document DE 10 2015 214709 discloses an acoustic damping chamber that includes a number of inner separation walls and at least a neck-like opening portion for getting connected with a diffuser through an opening or multiple openings configured on the diffuser. However, such conventional acoustic damping systems require the inner separation walls to be adjusted for adjusting the volume of the acoustic damping chamber, also the openings are to be adjusted for suppressing specific, disturbing sound waves in a particular frequency range only, thereby requiring intensive testing and adjustment efforts. Further, such conventional damping systems that require inner separation walls involve additional design and material costs. Additionally, use of Helmholtz resonators for dampening the noise are known, however, the Helmholtz resonators only effectively operate in a narrow, specific frequency range and are incapable of suppressing sound waves in a broader frequency range. Also, such conventional noise damping systems exhibit noise suppression capabilities limited to a relatively narrow frequency range only.

Known heating, ventilation and/or air conditioning devices comprise air inlet means comprising an air inlet box allowing the entry of one or more distinct air flows into the blower, and an air generating member such as a turbine, for example cylindrical, configured to be driven in rotation about its axis so as to draw the air flow or flows.

Such a blower is called "single-suction", because the air enters the blower from only one side of the turbine.

In order to separate two air flows, namely the recirculation air flow and the external air flow, the blower may comprise an air flow separation member configured to delimit a first air flow channel allowing the flow of a first air flow intended to pass through a first axial portion of the turbine and a second air flow channel allowing the flow of a second air flow intended to pass through a second axial portion of the turbine.

An object of the present invention is to provide an air conditioning system with a noise damping system that obviates the drawbacks associated with conventional noise damping systems that require intensive testing and adjustment efforts for suppressing specific, disturbing sound waves in a particular frequency range.

### SUMMARY OF THE INVENTION

The object of the invention is, among others, a blower unit for an air-conditioning device intended to be fitted to a motor vehicle, comprising an intake duct, a double suction type centrifugal fan comprising a first suction side and a second suction side, a motor configured to motorize the fan, and a scroll case, wherein the scroll case is adapted to split the air intake duct into at least a first air channel and a second air channel, the first air channel being adapted to feed the air into the first suction side, and the second air channel being adapted to feed air into the second suction side.

Preferably, the scroll case comprises a divider portion protruding into the air intake duct.

Preferably, the divider portion comprises an inner wall facing the fan and an outer wall facing the intake duct, wherein the inner wall and the outer wall define an inner volume.

Preferably, the inner volume is air-tight.

Preferably, the inner volume is filled with a sound absorbing material.

In one option, the inner volume is divided with at least one inner wall.

Preferably, the inner wall is made with the same material as the outer wall.

Preferably, the inner wall is made with a material having better sound permeability than the outer wall.

Preferably, the outer wall comprises a ridge from which at least two sloping portions stem respectively toward the suction sides of the fan in order to minimize turbulences of the incoming air.

Preferably, the motor comprises an elongated shaft on which blades of the fan are mounted, the first suction side and the second suction side being arranged in series on said shaft with respect to the motor.

Preferably, the elongated shaft extends substantially perpendicular to the air flow within the intake duct and the scroll case along the extension of the divider portion.

Another object of the invention is a Heating Ventilation and Air Conditioning system comprising a blower unit as described above.

### BRIEF DESCRITPTION OF DRAWINGS

Examples of the invention will be apparent from and described in detail with reference to the accompanying drawings, in which:
Fig. 1 shows a blower unit according to the invention in a first perspective view and partial cross-section;
Fig. 2 shows a blower unit according to the invention in a second perspective view and partial cross-section;
Fig. 3 shows a blower unit according to the invention in another cross-section;
Fig. 4 shows a blower unit according to the invention in another cross-section.

### DETAILED DESCRIPTION OF EMBODIMENTS

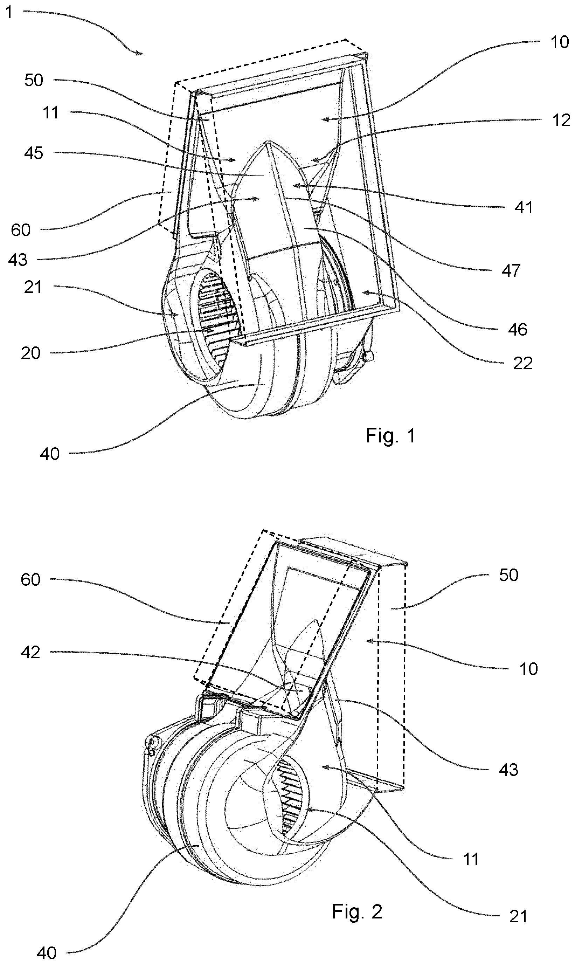

Fig. 1 shows a blower unit 1 according to the invention in a first perspective view and partial cross-section. The blower unit 1 is for an air-conditioning device, in particular to a one intended to be fitted to a motor vehicle. The blower unit 1 comprises an intake duct 10 for admitting air into the blower unit 1. Within the intake duct 10 there may be located a filter 50. The blower unit 1 further comprises a double suction type centrifugal fan 20 comprising a first suction side 21 and a second suction side 22, a motor 30 configured to motorize the fan 20, and a scroll case 40. The scroll case 40 houses the fan 20 and is adapted to guide the air sucked by the fan 20 further downstream the blower unit 1, for example towards an evaporator 60. The scroll case 40 is adapted to split the air intake 10 duct into at least a first air channel 11 and a second air channel 12, the first air channel 11 being adapted to feed the air into the first suction side 21, and the second air channel 12 being adapted to feed air into the second suction side 22. In other words, the air stream coming from the air-intake 10 is divided into two separate air channels 11, 12 that access separately two opposite suction sides 21, 22 of the fan 20. The air within the air intake duct 10 make come from one or more sources.

One way of ensuring splitting of the air intake duct 10 is by equipping the scroll case 40 with a divider portion 41 protruding into the air intake duct 10. An outlet air channel 46 may gather the air from the fan 20 and guide it in a direction substantially opposite to the air stream direction within the first and second air channels 11, 12. In other words, the outlet air channel 46 runs substantially parallel to the first and second air channels 11, 12. This way, the space is utilized in an efficient way, and the assembly is allowed to extend in a vertical direction instead of horizontal direction.

Fig. 2 shows a blower unit according to the invention in a second perspective view and partial cross-section. Preferably, the divider portion 41 comprises an inner wall 42 facing the fan 20 and an outer wall 43 facing the intake duct 10, wherein the inner wall 42 and the outer wall 43 define an inner volume 44. This inner volume 44 provides a sound damping properties and allows to limit the noise, in particular from the blower. This allows for a quieter operation of the assembly and improved comfort of the passengers within the vehicle. In one example, the inner volume 44 is air-tight. The inner volume 44 may be filled with a sound absorbing material, for example a foam. The inner volume 44 may be divided with at least one inner wall to control the sound absorbing properties therein.

Preferably, the outer wall 43 comprises a ridge 44 from which at least two sloping portions 45, 46 stem respectively toward the suction sides 21, 22 of the fan 20 in order to minimize turbulences of the incoming air.

The inner wall 42 may be made with the same material as the outer wall 43. Alternatively, the inner wall 42 may be made with a material having better sound permeability than the outer wall 43. An example may be fleece for the inner wall 42 and a plastic material for the outer wall 43.

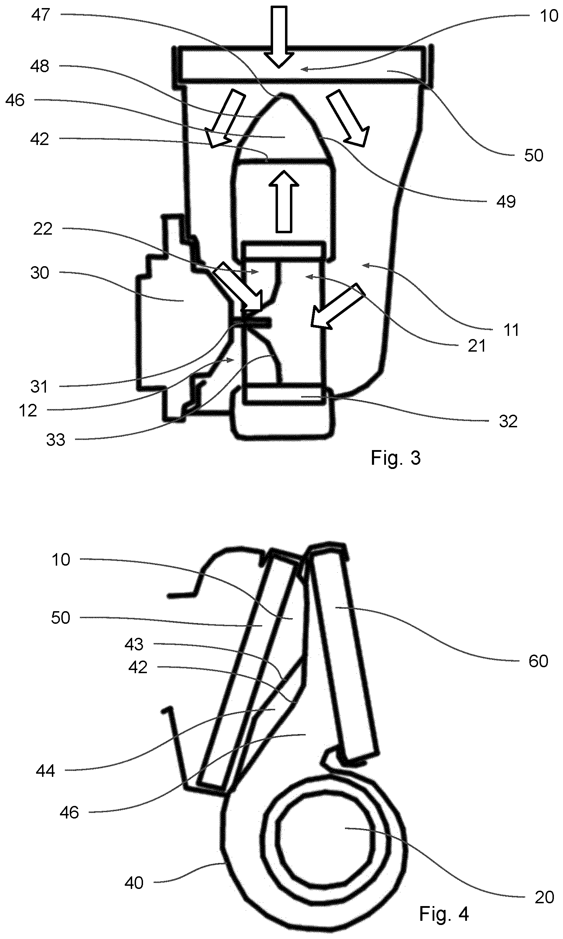

Fig. 3 shows a blower unit 1 according to the invention in another cross-section. As can be seen, the air stream enters through the air intake duct 10 and is split by the divider portion 41 into the first air channel 11 and the second air channel 12. Subsequently, the first air channel 11 feeds the air into the first suction side 21, and the second air channel 12 feeds air into the second suction side 22. This is achieved by appropriately shaping the air channels 11, 12 so that they bend the air stream from substantially vertical flow direction to horizontal direction. The air is then propelled by the fan 20 through the air outlet channel 46, for example towards the evaporator 60 or a pressure side filter (not shown).

The motor 30 preferably comprises an elongated shaft 31 on which blades 32 of the fan 20 are mounted, the first suction side 21 and the second suction side 22 being arranged in series on said shaft 31 with respect to the motor 30 and optionally separated through divider wall 33. Preferably, the elongated shaft 31 extends substantially perpendicular to the air flow within the intake duct 10 and the scroll case 40 when viewed along the general extension of the divider portion 41.

Fig. 4 shows a blower unit 1 according to the invention in another cross-section. It can be seen that the inner volume 44 is elongated and extends along at least a portion of the outlet channel 46 of the scroll case 40.

Other variations to the disclosed embodiments can be understood and effected by those skilled in the art in practicing the claimed invention, from a study of drawings, the disclosure, and the appended claims. The mere fact that certain measures are recited in mutually different dependent claims does not indicate that a combination of these measures cannot be used to the advantage.

## Claims

1. A blower unit 1 for an air-conditioning device intended to be fitted to a motor vehicle, comprising an intake duct 10, a double suction type centrifugal fan 20 comprising a first suction side 21 and a second suction side 22, a motor 30 configured to motorize the fan 20, and a scroll case 40, wherein the scroll case 40 is adapted to split the air intake 10 duct into at least a first air channel 11 and a second air channel 12, the first air channel 11 being adapted to feed the air into the first suction side 21, and the second air channel 12 being adapted to feed air into the second suction side 21.

2. A blower unit 1 according to claim 1, wherein the scroll case 40 comprises a divider portion 41 protruding into the air intake duct 10.

3. A blower unit 1 according to any preceding claim, wherein the divider portion 41 comprises an inner wall 42 facing the fan 20 and an outer wall 43 facing the intake duct 10, wherein the inner wall 42 and the outer wall 43 define an inner volume 44.

4. A blower unit 1 according to the previous claim, wherein the inner volume 44 is air-tight.

5. A blower unit 1 according to claim 3 or 4, wherein the inner volume 44 is filled with a sound absorbing material.

6. A blower unit 1 according to any of claims 3-5, wherein the inner volume 44 is divided with at least one inner wall.

7. A blower unit 1 according to any of claims 3-6, wherein the inner wall 42 is made with the same material as the outer wall 43.

8. A blower unit 1 according to any of claims 3-6, wherein the inner wall 42 is made with a material having better sound permeability than the outer wall 43.

9. A blower unit 1 according to any of the preceding claims, wherein the outer wall 43 comprises a ridge 47 from which at least two sloping portions 48, 49 stem respectively toward the suction sides 21, 22 of the fan 20 in order to minimize turbulences of the incoming air.

10. A blower unit 1 according to any preceding claim, wherein the motor 30 comprises an elongated shaft 31 on which blades 21 of the fan 20 are mounted, the first suction side 21 and the second suction side 22 being arranged in series on said shaft 31 with respect to the motor 30.

11. A blower unit 1 according to claim 2 and 10, wherein the elongated shaft 31 extends substantially perpendicular to the air flow within the intake duct 10 and the scroll case 40 along the extension of the divider portion 41.

12. A Heating Ventilation and Air Conditioning system comprising a blower unit 1 according to any preceding claim.
